# EUROPEAN PATENT SPECIFICATION

(11) **EP 1 875 113 B1**
(45) Date of publication and mention of the grant of the patent: **12.06.2019**
(21) Application number: 06721833.9
(22) Date of filing: 13.04.2006
(51) Int. Cl.: F16K 17/04, F16K 11/052, F16K 15/16, F16K 17/36, F28F 3/08, F28F 9/22

(54) **TUBULAR FLAPPER VALVES**
RÖHRENFÖRMIGE VENTILKLAPPEN
CLAPETS À BATTANT TUBULAIRES

(30) Priority: 20.04.2005 CA 2504757
(43) Date of publication of application: 09.01.2008
(73) Proprietor: Dana Canada Corporation, Oakville, Ontario L6K 3E4 (CA)
(72) Inventor: PERIC, Yuri, Oakville, Ontario L6M 4N1 (CA)
(74) Representative: Pfenning, Meinig & Partner mbB
(86) International application number: PCT/CA2006/000595
(87) International publication number: WO 2006/111007

(56) References cited:
- EP-A- 1 069 354
- BE-A3- 1 003 356
- CA-A- 1 005 319
- CA-A1- 1 102 210
- CA-A1- 1 122 968
- CA-A1- 2 120 426
- GB-A- 2 164 395
- US-A- 1 690 501
- US-A- 1 690 501
- US-A- 5 810 071
- US-A- 5 921 273

## Description

### FIELD OF THE INVENTION

This invention relates to a heat exchanger comprising a valve, and in particular, a flapper valve.

### BACKGROUND OF THE INVENTION

Automotive fluids, such as engine oil or transmission fluids, absorb heat in use. To prevent fluid deterioration, this heat often needs to be removed. Heat exchangers are commonly used for this purpose. Moreover, heat exchangers are known to perform this function adequately in moderate ambient conditions. However, in cold ambient conditions, engine oils and transmission fluids can be highly viscous. In such conditions, these automotive fluids do not flow easily through heat exchangers. As a result, in such conditions, the fluid pressure within the lubrication circuit, and particularly within the heat exchangers, can be high enough to damage the heat exchangers. In some cases, starvation of some downstream components, like transmissions, may even occur.

In order to avoid these adverse effects, it is known to provide a mechanism for bypassing the heat exchanger. One way that this has been done in the past is to provide a bypass conduit. The bypass conduit is connected in parallel with the heat exchanger and has a relatively low resistance to the flow of high viscosity fluids as compared to the heat exchanger. Structures of this type are known to provide pressure relief for the heat exchanger and avoid starvation of the downstream components, but can suffer in that, in normal operating conditions, the flow is split between the heat exchanger and the bypass circuit. This requires that the heat exchangers be made proportionately larger and heavier to achieve the same overall heat exchange performance for the cooling system. This added size and weight, and the associated costs therewith, are undesirable to automotive manufacturers.

In U.S. patent No. 4,193,442 issued to David R. Vian, a heat exchanger is coupled to an adapter which is positioned between an oil filter and the engine. The adapter includes a valve in the form of a bimetallic strip that opens under normal operating conditions to allow flow through the heat exchanger, and closes in cold conditions to prevent flow through the heat exchanger. A difficulty with the Vian device, however, is that it is a rather large and bulky structure, and it still does not protect the heat exchanger from high fluid pressures in all conditions, especially if the oil filter is plugged or partially plugged.

Document GB 2 164 395 A discloses a pressure regulating and bypassing device for a heat engine lubricating circuit that comprises at least one lubrication filter and a hollow connector. The hollow connector contains a control valve for obturating at least one aperture. The at least one aperture communicates the delivery circuit of the oil pump of the engine with a bore of the hollow connector leading to an oil inlet for said engine. The hollow connector supports a heat exchange intermediary part and an oil filter. Normally oil delivered by the pump passes through the heat exchanger and filter into the bore of the connector for supply to the oil inlet. At start-up, when the oil is viscous, the oil passes through the apertures under the control of a pressure or temperature control valve.

Document US 1 690 501 A discloses a heat exchanger comprising a tier of hollow, shallow, thin metal elements having inlet holes at one end and outlet holes at the other end, an inner ring having radial holes inside each element at each end, an outer ring between the elements of each adjacent pair at each end, complementary annular projections and recesses at the adjacent faces of adjacent rings and engaging one wall of an element between them and means for locating and clamping the parts in position and for providing a succession of annular spaces for enabling the fluid in the exchanger to pass through the elements in series.

Document BE 1 003 356 A3 discloses a one-way valve with the characteristic that it consists principally of a chamber that is connected to an outlet (2); at least one inlet in the wall of the chamber; and a flexible hose that connects to the wall of the chamber and that has a flexible lip-shaped part at the inlet opening that can close the said inlet opening.

### SUMMARY OF THE INVENTION

The subject matter of claim 1 relates to a heat exchanger comprising a heat exchange element having a spaced-apart inlet and outlet and a plurality of heat exchange passages extending therebetween, wherein a bypass valve assembly includes: a generally flat main body member connected to the heat exchange element and having: a transverse inlet opening defined through the body member and communicating with the heat exchange element inlet; a cylindrical wall portion defining a transverse outlet opening through the body member and orientated coaxially and communicating with the heat exchange element outlet, the cylindrical wall portion having a bypass opening formed therein, and a bypass passage extending between the inlet opening and the bypass opening; a flexible flapper dispensed within the outlet opening; locating means for maintaining the location of the flapper in the outlet opening, wherein the flapper has a free end portion biased for movement from an open position, spaced from the bypass opening, to a closed position, overlying the bypass opening, the free end portion being dimensioned to restrict flow through the bypass opening when disposed at its closed position.

In the present invention, a simple low-profile bypass valve assembly is provided. The bypass valve assembly utilizes a tubular flapper valve, and can be readily attached to any heat exchanger or other fluid device having a fluid inlet and a fluid outlet. The assembly provides for selective bypass flow between the fluid inlet and the fluid outlet, without preventing flow from the fluid outlet of the fluid device, yet being responsive to excessive pressures in the fluid inlet of the fluid device.

There is provided a bypass valve assembly for use with a fluid device having an inlet and an outlet. The assembly comprises a main body member having means defining an inlet opening, and a cylindrical wall portion defining an outlet opening spaced from the inlet opening and orientated coaxially with the fluid device outlet. The cylindrical wall portion has a bypass opening formed therein, and means defining a bypass passage extending between the inlet opening and the bypass opening. The inlet and outlet openings are adapted to be coupled in fluid communication respectively with the fluid device inlet and outlet for fluid flow through the fluid device. A flexible flapper is disposed within the outlet opening, the flapper having a free end portion movable between an open position, apart from the bypass aperture, and a closed position, overlying the bypass aperture, the free end portion being dimensioned to restrict flow through the bypass aperture when disposed at its closed position. Locating means are provided for maintaining the location of the flapper in the outlet opening. Also, bias means are provided for biasing the flapper into the closed position.

The heat exchanger includes a heat exchange element having a spaced-apart inlet and outlet and a plurality of heat exchange passages extending therebetween, characterized by a bypass valve assembly including a generally flat main body member connected to the heat exchange element and having: a transverse inlet opening defined through the body member and communicating with the heat exchange element inlet; a cylindrical wall portion defining a transverse outlet opening through the body member and orientated coaxially and communicating with the heat exchange element outlet, the cylindrical wall portion having a bypass opening formed therein, and a bypass passage extending between the inlet opening and the bypass opening; a flexible flapper maintained in the outlet opening, the flapper having a free end portion biased for movement from an open position, spaced from the bypass opening, to a closed position, overlying the bypass opening, the free end portion being dimensioned to restrict flow through the bypass opening when disposed at its closed position.

The flapper may be formed of spring steel to provide said bias, the spring constant of the spring steel being such that flow through the bypass opening occurs when the fluid pressure in the bypass passage exceeds a predetermined limit.

The heat exchanger may further comprise a tube mounted in the main body member outlet opening, the tube defining a bypass aperture in communication with the cylindrical wall portion bypass opening.

The cylindrical wall portion may have a groove formed therein, and may further comprise a tube mounted in the main body member outlet opening, the tube having a bypass aperture communicating with the cylindrical wall portion bypass opening, and wherein the flexible flapper is maintained in the outlet opening by a rivet attaching the flapper to the tube, the rivet being partially located in the groove.

Advantages, features and characteristics of the present invention, as well as methods of operation and functions of the related elements of the structure, and the combination of parts and economies of manufacture, will become apparent upon consideration of the following detailed description with reference to the accompanying drawings, the latter of which is briefly described hereinafter.

### BRIEF DESCRIPTION OF THE DRAWINGS

In the accompanying drawings, which are for the purpose of illustration and description only, and are not intended as a definition of the limits of the invention:
Figure 1 is a perspective view of a bypass and valve assembly according to a preferred embodiment of the present invention in use in a heat exchanger;
Figure 2 is a top plan view of the structure of Figure 1;
Figure 3 is a cross-sectional view of the structure of Figure 1, taken along lines 3-3 of Figure 2;
Figure 4 is an exploded perspective view of the heat exchanger of Figure 1;
Figure 5 is an enlarged view of encircled area 5 in Figure 4;
Figure 6 is an enlarged view of encircled area 6 in Figure 4;
Figure 7 is a partially exploded view of the structure of Figure 6;
Figure 8 is a fully exploded view of the structure of Figure 6;
Figure 9 is an enlarged view of encircled area 9 in Figure 6;
Figure 10A is a top plan view of the structure of Figure 9, wherein the free end portion of the flapper valve is disposed at its closed position;
Figure 10B is a view similar to Figure 10A, with the free end portion of the flapper valve disposed at its open position;
Figure 11 is a cross-sectional view of the structure of Figure 9, taken along lines 11-11 of Figure 10A;

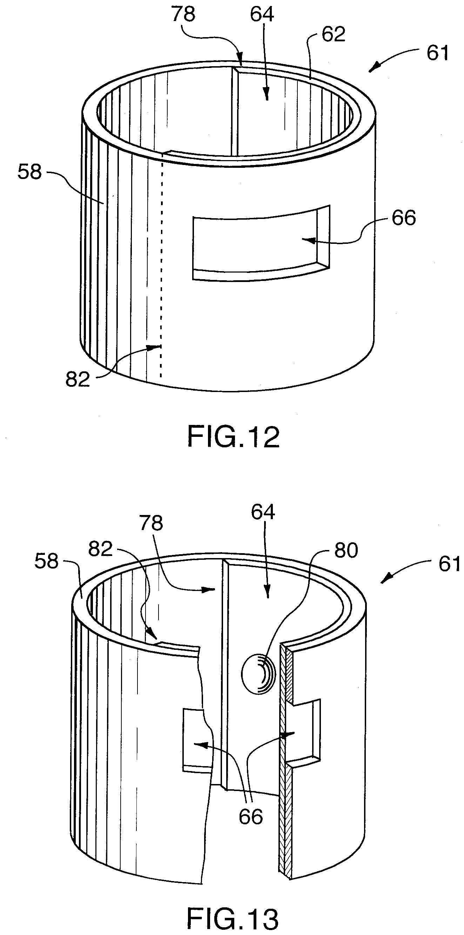

Figure 12 is an enlarged view of the encircled area 12 in Figure 7;
Figure 13 is a partial cutaway view of the structure of Figure 12;
Figure 14 is an enlarged plan view of a portion of Figure 10A, showing a further preferred embodiment of the invention;
Figure 15 is a view similar to Figure 3, showing a yet further preferred embodiment of the invention; and
Figure 16 is a plan view similar to Figure 14, showing yet a further preferred embodiment of the invention.

### DESCRIPTION OF THE PREFERRED EMBODIMENTS

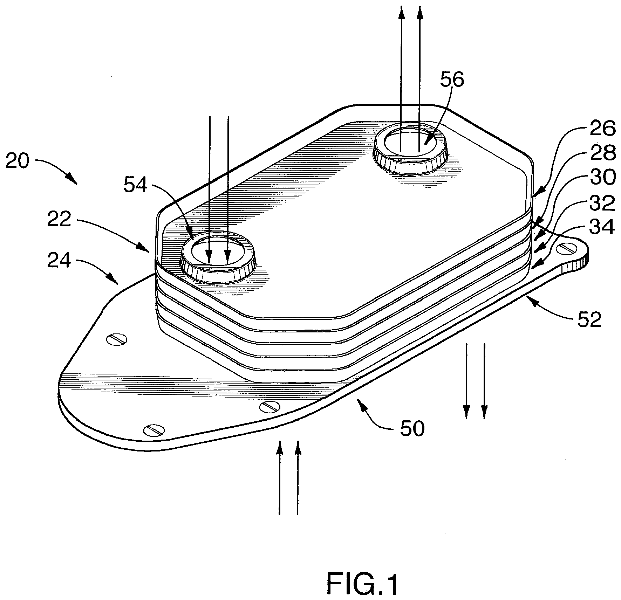

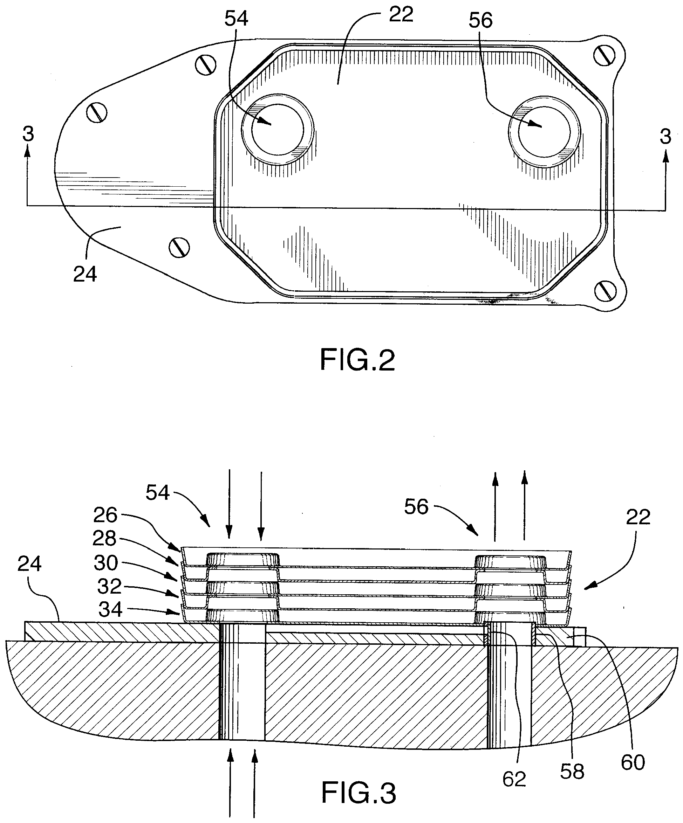

Figures 1 to 3 show a heat exchanger 20, which includes a fluid device, such as a heat exchange element 22, and a bypass valve assembly 24 constructed according to a preferred embodiment of the present invention. The heat exchanger 20 may be used as an oil cooler in a circuit for lubricating mechanical components (not shown).

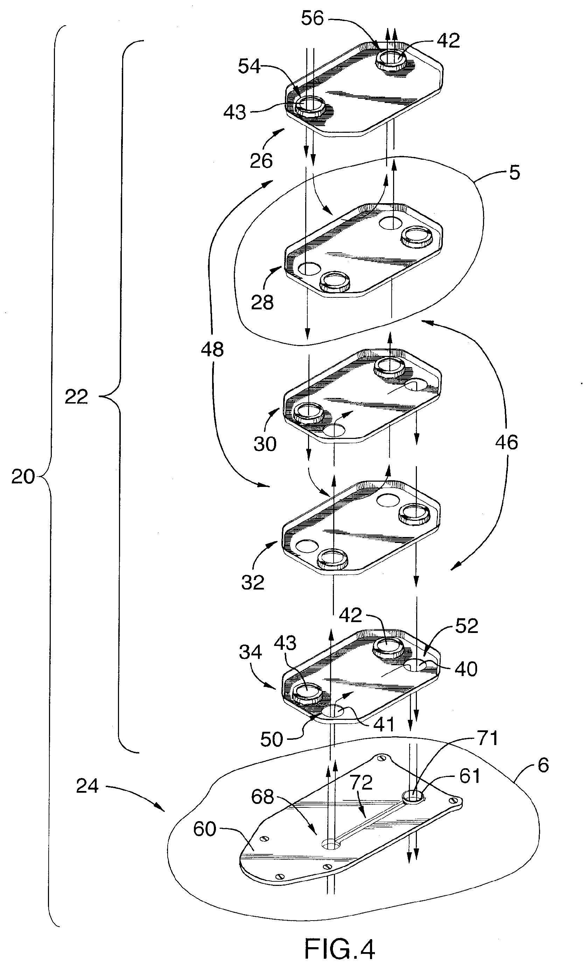

As best seen in Figure 4, wherein the heat exchanger 20 is shown in exploded perspective, the heat exchange element 22 is formed of a plurality of stamped aluminum passage-forming plates 26,28,30,32 and 34. Any number of plates 28 to 34 may be used in heat exchange element 22, as desired.

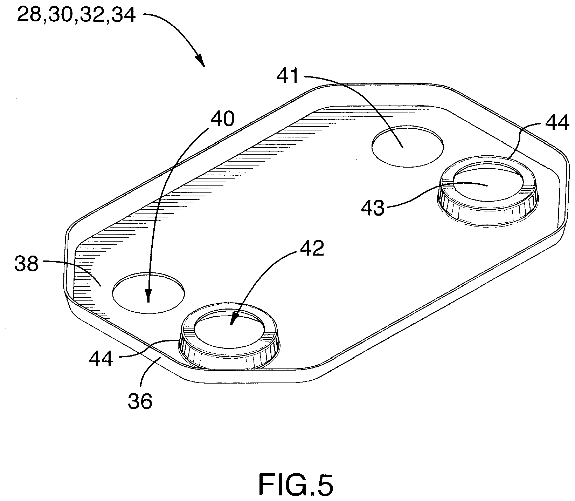

Passage-forming plates 28, 30, 32 and 34 are of identical construction. Each includes, as seen in Figure 5, a peripheral, upwardly and outwardly flaring flange or ridge 36 and a substantially planar central portion 38. The planar central portion 38 is punctuated with two pairs of apertures, namely, apertures 40, 41 and apertures 42, 43. The apertures 42, 43 are ringed with respective raised bosses 44.

Passage-forming plate 26 is of similar construction to plates 28,30,32,34 but lacks the pair of apertures 40, 41.

Plates 26,28,30,32 and 34 are stacked upon one another in nesting, alternating front-to-back and back-to-front orientation and sealed by brazing. As so sealed, plates 26,28,30,32 and 34 form heat exchange paths or passages 46 and 48 therebetween (see Figure 4), for oil and engine coolant, respectively, in heat exchange relationship to one another.

One or the other of the apertures 40, 41, namely aperture 41, in plate 34 defines an inlet 50, and the other of the apertures 40, 41 forms an outlet 52, respectively, for receiving and discharging oil into and from oil passages 46 between plates 32, 34 and 28, 30. Apertures 43 and 42 in plate 26 define a first coolant port 54 and a second coolant port 56, respectively, for receiving and discharging engine coolant into and from the coolant passages 48 between plates 26, 28 and 30, 32. The exact form of heat exchange element 22 is not considered to be part of the present invention, so will not be described in further detail herein.

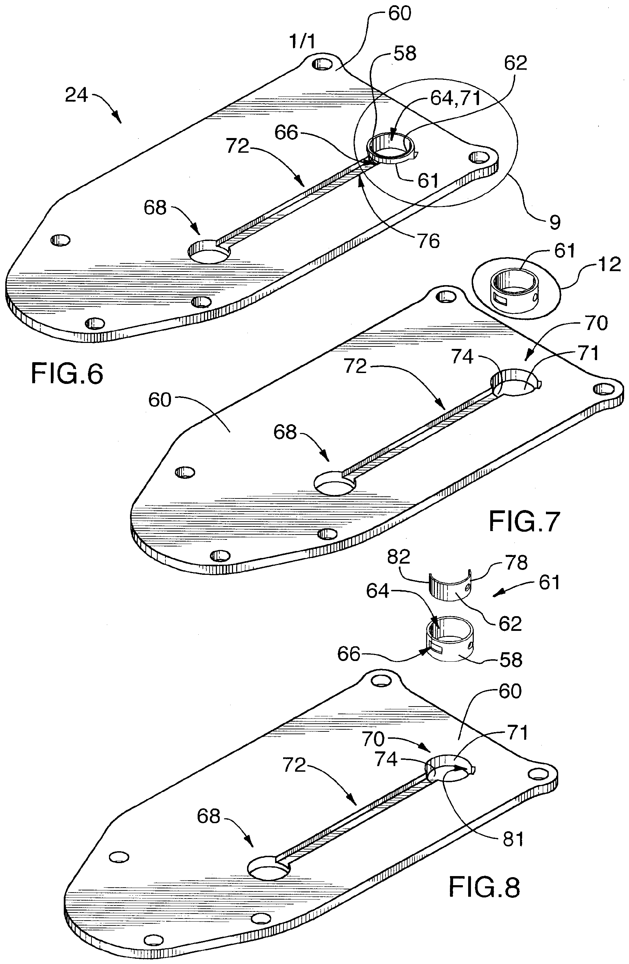

Referring to Figures 4 and 6, the bypass valve assembly 24 includes a main body member 60 and a flapper valve 61. Flapper valve 61 has a tubular member or tube 58 and a flexible or resilient flapper 62.

The main body member 60 is a substantially planar, stamped or machined plate, arranged beneath plate 34 and brazed thereto, thereby to occlude aperture pair 42, 43 of plate 34. As best illustrated in Figures 4 and 8, the main body member 60 defines an inlet opening 68 in fluid communication with the inlet 50 for receiving oil to be cooled by heat exchange element 22. Main body member 60 also has a cylindrical wall portion 70 which defines an outlet opening 71 spaced from inlet opening 68 and orientated coaxially and communicating with heat exchange element outlet 52. Main body member 60 also includes a bypass passage 72 extending between the inlet opening 68 and a bypass aperture or opening 74 formed in cylindrical wall portion 70.

The tube 58 is releasably mounted within the cylindrical wall portion 70, and is dimensioned to be frictionally held within outlet opening 71. The interior of the tube 58 then defines the actual outlet opening 64 that is in fluid communication with the outlet 52 of heat exchange element 22 to receive oil therefrom and deliver it to the lubrication circuit (not shown) to return oil thereto. The wall of tube 58 has a bypass aperture 66 (see Figure 8) formed therethrough in communication with the cylindrical wall portion bypass aperture 74, to permit fluid communication between the outlet opening 64 and the bypass passage 72.

As seen best in Figures 6, 9, 11 and 15, tube 58 extends slightly above the top surface of main body member 60. This helps to locate heat exchange element 22, because opening 40 in plate 34 can be located on tube 58 during assembly of heat exchange 20.

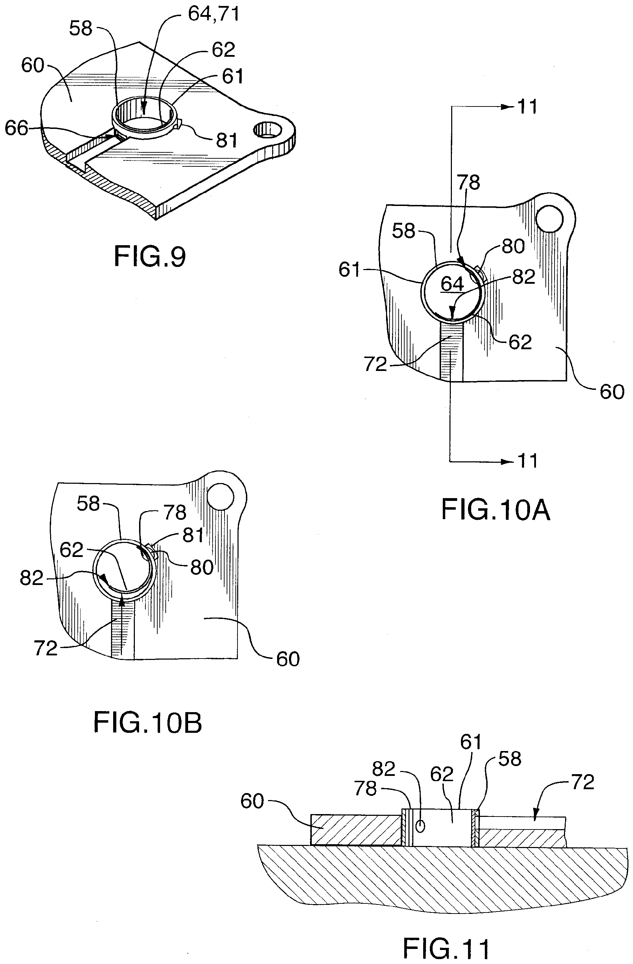

The flexible flapper 62 is disposed in the outlet opening 64. A mounting end portion 78 of the flapper 62 is mounted to tube 58 by a locating means in the form of a rivet 80 (see Figures 10 and 11). As indicated in Figure 8 and Figure 10B, the rivet 80 is partially located in a transverse groove or indent 81 formed in the cylindrical wall portion 70. The rivet 80 and the transverse groove 81 act in the manner of a key and keyway so as to ensure suitable axial positioning of the tube 58. The flapper 62 extends, from mounting end portion 78, in an arc spanning approximately one-half of the inner circumference of the cylindrical wall portion 70 or tube 58, to a free end portion 82 remote from mounting end portion 78.

The free end portion 82 is movable, by flexure of flapper 62, between an open position, as shown in Figure 10B, and a closed position, as shown in Figure 10A. In the open position, the flapper 62 is spaced apart from bypass opening 66, and in the closed position, the flapper 62 overlies the bypass aperture 66. The free end portion 82 is dimensioned to restrict, and more specifically, substantially arrest, flow through the bypass aperture 66 when disposed at its closed position, and is biased into the closed position by the flapper being formed of spring steel. For greater clarity in this regard, it should be understood that in the preferred embodiment illustrated, the flapper 62 is under compression when the free end portion 82 is at its closed position, such that, if removed from the tube 58, it would assume a relatively flatter configuration (not shown).

The mechanical properties or spring constant of the flapper 62 may be selected to suit the operating parameters of the particular heat exchange element with which it is to be used. For example, the spring constant of flapper 62 can be chosen so that the flow through bypass aperture 66 or 74 occurs when the fluid pressure in bypass passage 72 exceeds a predetermined limit, which may be set below the burst strength of heat exchange element 22.

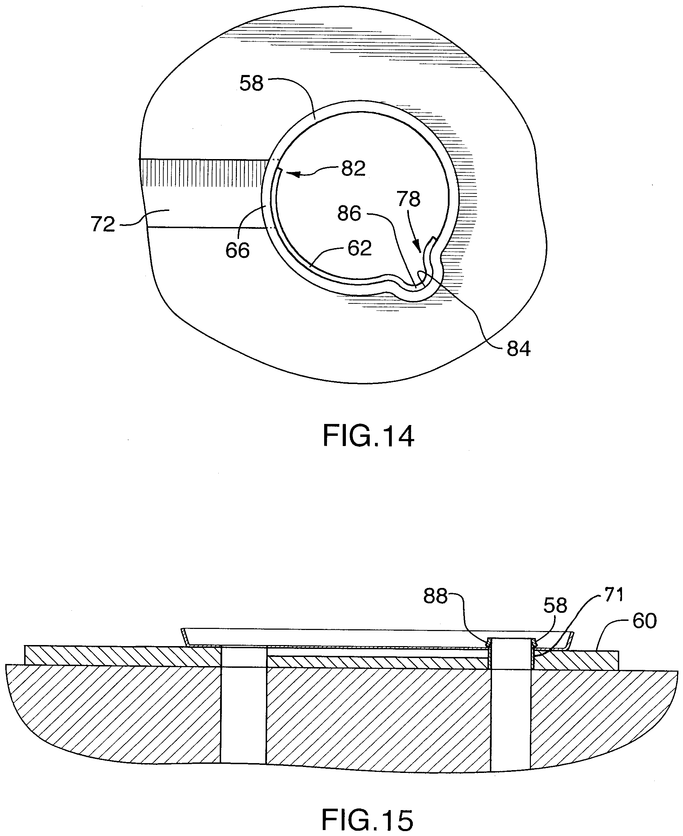

A further preferred embodiment of the invention is shown in Figure 14. In this embodiment, tube 58 has a transverse groove 84 formed therein; the mounting end portion 78 of the flapper 62 has a corresponding transverse ridge 86; and the flapper 62 is located and fixed to the tube 58 by engagement of the ridge 86 in the groove 84 in the manner of a key in a keyway. Additionally, the flapper 62 is optionally shortened, such that the free end portion 82 of the flapper 62 overlies the bypass aperture 66 only in part, thereby to merely restrict, rather than substantially arrest bypass flow when disposed at its closed position.

A yet further preferred embodiment of the invention is shown in Figure 15. In this embodiment, the tube 58 is provided with resilient tabs 88 which pop out after the tube 58 has been fitted into opening 71, so as to prevent withdrawal of the tube 58.

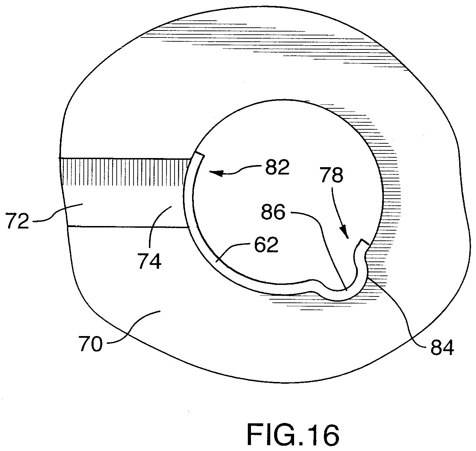

Figure 16 shows a further modification of the embodiment shown in Figure 14, wherein the tube 58 has been eliminated. In this embodiment, transverse groove 84 is formed in cylindrical wall portion 70, and flapper 62 fully blocks or arrests flow through bypass opening 74 in cylindrical wall portion 70.

In use, in normal operating conditions, wherein relatively warm, substantially free-flowing oil is delivered to inlet opening 68, bias provided by the spring flapper 62 maintains the free end portion 82 of the flapper 62 in occluding relation against the bypass aperture 66 or 74 to restrict, and more specifically, substantially arrest bypass flow, with the possible exception of periodic, momentary burst flows or pressure spikes that may occur at inlet opening 68. This protects the heat exchange element 22.

In contrast, in conditions such as are present in the context of an engine start in relatively cold ambient conditions, wherein the oil is relatively cold, viscous oil is delivered to the inlet opening 68. In these circumstances, the inlet pressure to heat exchange element 22 is relatively large, with the result that the viscous oil forces the free end portion 82 of the flapper 62 away from the bypass aperture 66 or 74, as indicated by the sequence of Figures 10A, 10B, such that bypass flow circumvents the heat exchange element 22, thus again protecting it from excessive fluid pressures.

This structure is of particular advantage, in that it obtains relatively high cooling performance in normal operating conditions, when cooling is needed, as substantially all oil passed through the heat exchange element 22 to transfer its heat to the engine coolant in such conditions.

At the same time, the structure avoids starvation of mechanical components in normal transient high pressure conditions, such as cold weather startup, and also avoids metal fatigue that can result from pressure spikes in the thin-wall plates forming the heat exchanger.

As well, merely by modifying the structure of the main body member, the assembly can be readily tailored for use with flow devices of widely divergent structure. Advantageously, the main body member is brazed to the fluid device, and the components of the fluid device are brazed to one another, contemporaneously, and thereafter, the flapper valve is fitted within the outlet opening 71 in cylindrical wall portion 70, for subsequent shipping to an automotive manufacturer for installation.

Having described preferred embodiments of the present invention, it will be appreciated that various modifications may be made to the structures described above without departing from the scope of the invention.

Firstly, whereas the bypass valve assembly of the preferred embodiments is shown in use with a heat exchanger, it should be understood that the invention is not so limited, and may be deployed in association with any fluid device having an inlet and an outlet.

It should also be understood that whereas the disclosure illustrates and describes a heat exchanger of specific construction, modifications therein are also contemplated to fall within the scope of the invention.

Thus, for example, and without limitation, greater or lesser numbers of plates may be utilized to form the oil and coolant passages; the plates may be of different geometric construction; and may be sealed to one another by different methods, for example, by epoxy.

As well, turbulizers, of expanded metal or the like (not shown), may be disposed between the plates, as desired.

Further, whereas the bypass passage of the preferred embodiment is a groove formed in the main body member, with the passage-forming plates stacked upon the main body member forming an upper limit of the bypass passage, it will be evident that the bypass passage could, for example, be a channel or conduit formed entirely within the main body member, and thus not be dependent upon the passage-forming plate above for closure.

Yet further, whereas the main body portion is a machined plate in the preferred embodiment, it could equally be formed of one or more stamped plates, if it was desired to avoid machining.

As a further modification, whereas the flapper of the preferred embodiment consists of a strip of simple spring steel, a resilient bimetallic strip could be readily substituted therefor, to open and close under predetermined temperature conditions. A bimetallic strip, being resilient and flexible, would still provide pressure relief even in warm operating conditions.

Additionally, whereas the free end portion of the flapper of the preferred embodiments illustrated takes the form of a thin metal plate, modifications are possible. For example, the free end portion could be provided with a protuberance (not shown) that projects into the bypass aperture at the closed position to facilitate sealing, thereby to permit the relative amount of compression of the flapper valve at the closed position to be reduced, or to permit compression to be eliminated altogether, while still providing adequate sealing.

From the foregoing, it will be evident to persons of ordinary skill in the art that the scope of the present invention is limited only by the accompanying claims, purposively construed.

## Claims

1. A heat exchanger (20) comprising:
a heat exchange element (22) having a spaced-apart inlet (50) and outlet (52) and a plurality of heat exchange passages (48) extending therebetween,
**characterized by**
a bypass valve assembly (24) including:
a generally flat main body member (60) connected to the heat exchange element (22) and having: a transverse inlet opening (68) defined through the body member (60) and communicating with the heat exchange element inlet (50); a cylindrical wall portion (70) defining a transverse outlet opening (71) through the body member (60) and orientated coaxially and communicating with the heat exchange element outlet (52), the cylindrical wall portion (70) having a bypass opening (74) formed therein, and a bypass passage (72) extending between the inlet opening (68) and the bypass opening (74);
a flexible flapper (62) dispensed within the outlet opening (71);
locating means for maintaining the location of the flapper in the outlet opening (71),
wherein the flapper (62) has a free end portion (82) biased for movement from an open position, spaced from the bypass opening (74), to a closed position, overlying the bypass opening (74), the free end portion (82) being dimensioned to restrict flow through the bypass opening (74) when disposed at its closed position.

2. A heat exchanger (20) according to claim 1, wherein the flapper (62) is formed of spring steel to provide said bias, the spring constant of the spring steel being such that flow through the bypass opening (74) occurs when the fluid pressure in the bypass passage (72) exceeds a predetermined limit.

3. A heat exchanger (20) according to claim 2, and further comprising a tube (58) mounted in the main body member outlet opening (71), the tube (58) defining a bypass aperture (66) in communication with the cylindrical wall portion bypass opening (74).

4. A heat exchanger (20) according to claim 2, wherein the cylindrical wall portion (70) has a transverse groove (81) formed therein, and further comprising a tube (58) mounted in the main body member outlet opening (71), the tube (58) having a bypass aperture (66) communicating with the cylindrical wall portion bypass opening (74), and wherein the flexible flapper (62) is maintained in the outlet opening (71) by a rivet (80) attaching the flapper (62) to the tube (58), the rivet (80) being partially located in the groove (81).

## Patentansprüche

1. Wärmetauscher (20), welcher aufweist:
ein Wärmeaustauschelement (22) mit einem Einlass (50) und einem Auslass (52), die in gegenseitigem Abstand angeordnet sind, und mehreren Wärmeaustausch-Durchgängen (48), die sich zwischen diesen erstrecken,
**gekennzeichnet durch**
eine Umgehungsventilanordnung (24), welche enthält:
ein im Allgemeinen flaches Hauptkörperteil (60), das mit dem Wärmeaustauschelement (22) verbunden ist und hat: eine transversale Einlassöffnung (68), die durch das Körperteil (60) definiert ist und mit dem Einlass (50) des Wärmeaustauschelements kommuniziert; einen zylindrischen Wandbereich (70), der eine transversale Auslassöffnung (71) durch das Körperteil (60) und koaxial orientiert und mit dem Auslass (52) des Wärmeaustauschelements kommunizierend definiert, welcher zylindrische Wandbereich (70) eine in diesem gebildete Umgehungsöffnung (74) und einen Umgehungsdurchgang (72), der sich zwischen der Einlassöffnung (68) und der Umgehungsöffnung (74) erstreckt, hat;
eine flexible Klappe (62), die innerhalb der Auslassöffnung (71) verteilt ist;
Fixierungsmittel zum Aufrechterhalten des Orts der Klappe in der Auslassöffnung (71),
wobei die Klappe (62) einen freien Endbereich (82) hat, der vorgespannt ist für eine Bewegung aus einer geöffneten Position, die einen Abstand von der Umgehungsöffnung (74) aufweist, in eine geschlossene Position, die über der Umgehungsöffnung (74) liegt, wobei der freie Endbereich (82) so bemessen ist, dass er die Strömung durch die Umgehungsöffnung (74) beschränkt, wenn er in seiner geschlossenen Position angeordnet ist.

2. Wärmetauscher (20) nach Anspruch 1, bei dem die Klappe (62) aus Federstahl gebildet ist, um die Vorspannung zu erhalten, wobei die Federkonstante des Federstahls derart ist, dass eine Strömung durch die Umgehungsöffnung (74) auftritt, wenn der Fluiddruck in dem Umgehungsdurchgang (72) eine vorbestimmte Grenze überschreitet.

3. Wärmetauscher (20) nach Anspruch 2 und weiterhin aufweisend ein Rohr (58), das in der Hauptkörperteil-Auslassöffnung (71) befestigt ist, welches Rohr (58) eine Umgehungsöffnung (66) in Kommunikation mit der Umgehungsöffnung (74) des zylindrischen Wandbereichs definiert.

4. Wärmetauscher (20) nach Anspruch 2, bei dem der zylindrische Wandbereich (70) eine in diesem gebildete transversale Nut (81) hat, und weiterhin aufweisend ein Rohr (58), das in der Hauptkörperteil-Auslassöffnung (71) befestigt ist, welches Rohr (58) eine Umgehungsöffnung (66), die mit der Umgehungsöffnung (74) des zylindrischen Wandbereichs kommuniziert, hat, und wobei die flexible Klappe (62) durch einen Niet (80) in der Auslassöffnung (71) gehalten wird, der die Klappe (62) an dem Rohr (58) befestigt, wobei der Niet (80) teilweise in der Nut (81) angeordnet ist.

## Revendications

1. Échangeur thermique (20) comprenant :
un élément d'échange thermique (22) qui comporte une entrée (50) et une sortie (52) qui sont espacées l'une de l'autre et une pluralité de passages d'échange thermique (48) qui s'étendent entre elles ;
**caractérisé par** :
un assemblage de clapet de dérivation (24) qui inclut :
un élément de corps principal de forme générale plane (60) qui est connecté à l'élément d'échange thermique (22) et qui comporte : une ouverture d'entrée transversale (68) qui est définie au travers de l'élément de corps principal (60) et qui est en communication avec l'entrée d'élément d'échange thermique (50) ; une partie de paroi cylindrique (70) qui définit une ouverture de sortie transversale (71) au travers de l'élément de corps principal (60) et qui est orientée de façon coaxiale avec la sortie d'élément d'échange thermique (52) et qui est en communication avec cette même sortie d'élément d'échange thermique, la partie de paroi cylindrique (70) comportant une ouverture de dérivation (74) qui est formée en son sein, et un passage de dérivation (72) qui s'étend entre l'ouverture d'entrée (68) et l'ouverture de dérivation (74) ;
un battant flexible (62) qui est prévu à l'intérieur de l'ouverture de sortie (71) ;
un moyen de localisation pour maintenir la localisation du battant à l'intérieur de l'ouverture de sortie (71) ; dans lequel :
le battant (62) comporte une partie d'extrémité libre (82) qui est sollicitée par poussée de manière à ce qu'elle se déplace depuis une position ouverte, selon une relation d'espacement par rapport à l'ouverture de dérivation (74), jusqu'à une position fermée, selon une relation de positionnement au-dessus de l'ouverture de dérivation (74), la partie d'extrémité libre (82) étant dimensionnée de manière à ce qu'elle restreigne un écoulement au travers de l'ouverture de dérivation (74) lorsqu'elle est disposée dans sa position fermée.

2. Échangeur thermique (20) selon la revendication 1, dans lequel le battant (62) est formé à partir d'acier à ressort de manière à ce qu'il assure ladite sollicitation par poussée, la constante de rappel de l'acier à ressort étant telle que l'écoulement au travers de l'ouverture de dérivation (74) se produit lorsque la pression de fluide à l'intérieur du passage de dérivation (72) excède une limite prédéterminée.

3. Échangeur thermique (20) selon la revendication 2, et comprenant en outre un tube (58) qui est monté à l'intérieur de l'ouverture de sortie d'élément de corps principal (71), le tube (58) définissant une ouverture de dérivation (66) qui est en communication avec l'ouverture de dérivation de partie de paroi cylindrique (74).

4. Échangeur thermique (20) selon la revendication 2, dans lequel la partie de paroi cylindrique (70) comporte une gorge transversale (81) qui est formée en son sein, et comprenant en outre un tube (58) qui est monté à l'intérieur de l'ouverture de sortie d'élément de corps principal (71), le tube (58) comportant une ouverture de dérivation (66) qui est en communication avec l'ouverture de dérivation de partie de paroi cylindrique (74), et dans lequel le battant flexible (62) est maintenu à l'intérieur de l'ouverture de sortie (71) au moyen d'un rivet (80) qui fixe le battant (62) sur le tube (58), le rivet (80) étant partiellement localisé à l'intérieur de la gorge (81).
